# EUROPÄISCHE PATENTANMELDUNG

(11) **EP 4 803 447 A1**
(43) Veröffentlichungstag der Anmeldung: **09.09.2026**
(21) Anmeldenummer: 26162323.5
(22) Anmeldetag: 04.03.2026
(51) Int. Cl.: B65G 1/14

(54) **STAPELSÄULE ZUM LAGERN VON GÜTERN**

(30) Priorität: 05.03.2025 DE 102025108269
(71) Anmelder: MTS Maschinenbau GmbH, 88512 Mengen (DE)
(72) Erfinder: Laible, Dr. Eckhard, 71144 Leinfelden-Schlechtenmühle (DE)
(74) Vertreter: Patentanwälte und Rechtsanwalt Weiß, Arat & Partner mbB

(57) **Zusammenfassung**

Die Erfindung betrifft eine Stapelsäule zur Aufnahme von Lagerteilen auf einer Stapelklinke (1), wobei ein Grundkörper (2) aus zwei Seitenwangen (3, 4) besteht, die über eine Rückwand (5) miteinander verbunden sind, wobei die beiden Seitenwangen (3, 4) mit der Rückwand (5) eine Rinnenform ausbilden, wobei zwischen den beiden Seitenwangen (3, 4) in der Rinnenform die Stapelklinken (1) übereinander schwenkbar angeordnet sind, wobei den Stapelklinken (1) jeweils einen Achsbolzen (6) und einen Gestängebolzen (7) zugeordnet ist, wobei der Gestängebolzen (7) innerhalb zweier Bogen-Langlöcher (8.1, 8.2) beweglich geführt ist, wobei die Bogen-Langlöcher (8.1, 8.2) jeweils in eine der Seitenwangen (3, 4) eingelassen sind, und der Achsbolzen (6) zwischen den beiden Seitenwangen (3, 4) und in Bohrungen (9.1, 9.2) der Seitenwange (3, 4) drehbar gelagert ist, wobei um den Achsbolzen (6) eine Rückstellfeder (10) angeordnet ist, deren erstes Federbein (11.1) gegen die Rückwand drückt (5) und deren zweites Federbein (11.2) den Gestängebolzen (7) zu einer Ruhestellung hindrückend angeordnet ist, wobei eine Radialfeder (12) den Gestängebolzen (7) und den Achsbolzen (6) verbindet und den Gestängebolzen (7) zu dem Achsbolzen (6) ziehend angeordnet ist und dabei den Gestängebolzen (7) an eine zu dem Achsbolzen (6) weisende Innenkontur (13) der Bogen-Langlöcher (8.1, 8.2) zieht, wobei die Stapelklinke (1) aus einem Klinkenfinger (21) und einer Führungsaufnahme (22) besteht, wobei der Klinkenfinger (21) zu der Führungsaufnahme (22) über einen Gelenkbolzen (15) schwenkbar gelagert ist.

## Beschreibung

### Technisches Gebiet

Die Erfindung betrifft eine Stapelsäule zum Lagern von Gütern nach dem Oberbegriff des Anspruchs 1.

### Stand der Technik

Derartige Stapelsäulen sind bereits in vielfältiger Form und Ausgestaltung bekannt und gebräuchlich. So wird beispielsweise in der DE 20 2009 002 432 U1 eine Stapelsäule offenbart, die zum Lagern von Karosserieteilen dient, die auf Abstand zueinander zwischen mehreren Stapelsäulen eingelegt werden. Beim Einlegen eines Karosserieteils schwenkt eine erste Klinke automatisch in die Arbeitsstellung, sodass der Tragarm der ersten Klinke das Teil aufnimmt. Über ein Gestänge wird die zweite darüberliegende Klinke in die Bereitschaftsstellung gebracht , während die darüberliegende Klinken sich noch in Ruhelage bleiben. Da in manchen Anwendungen mehrere Karosserieteile übereinander auf der selben Klinke gestapelt und einzeln entladen werden, könnten leere Klinken den Entladeprozess behindern. Um dies zu verhindern, ist der Tragarm der Klinke gelenkig mit dem Stützteil der Klinke verbunden und kann unabhängig davon ausgeschwenkt werden, sodass er außerhalb des Zugriffsbereichs des Karosserieteils liegt. Die Herstellungskosten der einzelnen Klinken sind höher, da sie sich aus mehr einzelnen Bauteile aufbauen. So bedürfen die Klinken im aus dem Dokument eines Anschlags an einer Rückwand.

### Aufgabe der Erfindung

Die Aufgabe der vorliegenden Erfindung ist es, die Nachteile aus dem Stand der Technik zu überwinden. Insbesondere soll eine Stapelsäule bereitgestellt werden, die auf einer Klinke mehrere aufeinander oder ineinander gestapelte Lagergüter aufnimmt und beim einzelnen Entladen auch entsprechend nacheinander vom Tragarm der Klinke entnommen werden können.

### Lösung der Aufgabe

Zur Lösung der Aufgabe führen die Merkmale nach dem Anspruch 1.

Vorteilhafte Ausgestaltungen sind in den Unteransprüchen beschrieben.

Die erfindungsgemäße Stapelsäule zur Aufnahme von Lagergütern auf einer einzigen Stapelklinke ist so konstruiert, dass die Stapelklinke aus einer Ruhestellung in eine Bereitschaftsstellung überführt wird. Um Lagergüter übereinander oder nebeneinander in definierten Abständen auf einer Stapelklinke zu platzieren, werden mehrere Stapelklinken verwendet, die entweder übereinander oder nebeneinander angeordnet sind. Diese Stapelklinken sind innerhalb der Rinnenform zwischen den beiden Seitenwangen schwenkbar gelagert.

Die Stapelklinken sind über ein Gestänge miteinander verbunden, das am Gestängebolzen angreift. Das Gestänge sorgt dafür, dass die Bewegung einer Stapelklinke gesteuert wird: Sobald eine Stapelklinke die Arbeitsstellung erreicht, also beladen ist, wird die benachbarte Stapelklinke aus der Ruhestellung in die Bereitschaftsstellung versetzt. Die Bereitschaftsstellung kennzeichnet den Zustand, in dem die Stapelklinke für das nächste Lagergut bereit ist.

Die Bewegung der Stapelklinken erfolgt über das Gestänge, das ihre Position zwischen Ruhestellung, Bereitschaftsstellung und Arbeitsstellung steuert. Das Gestänge ist dabei mit dem Gestängebolzen verbunden. Die erste bzw. unterste Stapelklinke stellt eine Ausnahme dar, da sie sich in der Regel nicht in einer Ruhestellung befindet, sondern nur zwischen der Bereitschaftsstellung und der Arbeitsstellung wechselt. Sie ist direkt an der Fußplatte angeordnet und bleibt stets in einer dieser beiden Positionen.

Bisher war es üblich, dass Lagergüter nur in einem einzigen Ladevorgang auf eine Stapelklinke abgelegt wurden. Eine mehrstufige Beladung, bei der mehrere Lagergüter nacheinander auf eine einzige Stapelklinke platziert werden, war nicht möglich. Dies entsprach jedoch nicht der effizientesten Vorgehensweise, da Lagergüter in der Praxis oft nacheinander produziert oder aus einer Herstellungsmaschine entnommen und dann abgelegt werden.

Die erfindungsgemäße Stapelsäule ermöglicht nun einen mehrstufigen Beladungsprozess. Dadurch können mehrere Lagergüter auf einer einzigen Stapelklinke abgelegt werden. Und zwar unabhängig davon, ob sie funktional zusammengehören oder nicht.

Die Stapelsäule besteht aus einem Grundkörper mit zwei Seitenwangen, die über eine Rückwand verbunden sind. Die Stapelklinken sind zwischen den beiden Seitenwangen drehbar an einem Achsbolzen gelagert. Diese Seitenwangen bilden mit der Rückwand eine Rinnenform, die optional eine Fußplatte umfassen kann. Die Fußplatte kann auf einem Untergrund befestigt sein, beispielsweise auf dem Boden einer Werkshalle, einem Lagerwagen oder einer Palette.

Jede Stapelklinke besitzt einen Gestängebolzen, der innerhalb eines geraden oder gebogenen Langlochs in der Seitenwange beweglich ist. Dadurch wird die Bewegung der Stapelklinke in definierter Form vollzogen. Das Gestänge steuert die Bewegung zwischen Ruhe-, Bereitschafts- und Arbeitsstellung. In der beschriebenen Ausführungsform wird der Gestängebolzen innerhalb zweier Bogen-Langlöcher geführt, die jeweils in die Seitenwangen eingelassen sind. Der Achsbolzen wiederum ist zwischen den Seitenwangen gelagert und dreht sich innerhalb entsprechender Bohrungen.

Zur Rückstellung der Stapelklinke ist eine Rückstellfeder um den Achsbolzen angeordnet. Ihr erstes Federbein drückt gegen die Rückwand, während ihr zweites Federbein den Gestängebolzen in die Ruhestellung zurückführt. Das bedeutet, dass die Rückstellfeder ihre Kraft nutzt, um die Stapelklinke in die Ruhestellung zu drücken, während das Gewicht des Lagerguts eine entgegengesetzte Kraft auf die Stapelklinke ausübt.

Zusätzlich zu einem Gestängebolzen besitzt jede Stapelklinke auch einen Achsbolzen. Diese Bolzen sind nicht Teil der Stapelklinke selbst, sondern dienen ihrer Funktionsweise.

Eine wesentliche Neuerung der Erfindung ist die Verwendung einer Radialfeder, die den Gestängebolzen mit dem Achsbolzen verbindet. Diese Radialfeder zieht den Gestängebolzen in Richtung des Achsbolzens und sorgt gleichzeitig dafür, dass der Gestängebolzen ständig an die Innenkontur der Bogen-Langlöcher gedrückt wird. Dies ermöglicht eine kontrollierte Bewegung des Gestängebolzens und damit auch der Stapelklinke.

Besonders hervorzuheben ist die spezielle Konstruktion der Stapelklinke, die aus zwei zentralen Komponenten besteht: dem Klinkenfinger und der Führungsaufnahme. Diese beiden Elemente sind über einen Gelenkbolzen schwenkbar miteinander verbunden. Dadurch kann sich der Klinkenfinger unabhängig bewegen, während er dennoch stabil in der Führungsaufnahme gehalten wird. Eine entscheidende Eigenschaft dieser Konstruktion ist, dass sich der Klinkenfinger nach dem vollständigen Entladen der Stapelklinke allein durch sein Eigengewicht automatisch wieder in die Ruhestellung zurückschwenkt. Dabei erfolgt jedoch nicht nur die Rückbewegung des Klinkenfingers selbst, sondern die gesamte Stapelklinke schwenkt durch die Schwerkraft und die wirkenden Kräfte gemeinsam in ihre Ruhestellung zurück. Diese Mechanik gewährleistet einen zuverlässigen und störungsfreien Betrieb, da keine zusätzlichen mechanischen oder elektrischen Rückstellmechanismen erforderlich sind.

Ein besonderer Vorteil dieser Bauweise zeigt sich vor allem beim selektiven Entladen einzelner Lagergüter, insbesondere dann, wenn sich mehrere Lagergüter auf einer einzigen Stapelklinke befinden. Ohne die schwenkbare Lagerung des Klinkenfingers könnte die darüberliegende Stapelklinke den Entladeprozess erheblich erschweren oder sogar blockieren. Dies liegt daran, dass sie sich in der Bereitschaftsstellung befindet und aus dem Grundkörper herausragt, während die darunterliegende Stapelklinke gerade entladen wird. In einem herkömmlichen System würde dies dazu führen, dass die darüberliegende Klinke manuell oder durch eine gesonderte Mechanik bewegt werden müsste, um das darunterliegende Lagergut ungehindert entnehmen zu können.

Durch die schwenkbare Lagerung des Klinkenfingers innerhalb der Führungsaufnahme wird dieses Problem jedoch auf elegante Weise gelöst. Sobald ein Lagergut von der unteren Stapelklinke entnommen wird, kann der Klinkenfinger der darüberliegenden Stapelklinke automatisch in den Grundkörper zurückschwenken. Dadurch wird verhindert, dass die übergeordnete Stapelklinke den Entladevorgang behindert. Sobald das Lagergut vollständig entnommen und an der darüberliegenden Klinke vorbeigeführt wurde, schwenkt der Klinkenfinger aufgrund der konstruktiven Gegebenheiten und seines Eigengewichts selbstständig wieder in die Bereitschaftsstellung zurück. Dies ermöglicht eine kontinuierliche und reibungslose Entnahme der Lagergüter, ohne dass manuelle Eingriffe oder zusätzliche Mechanismen erforderlich sind.

Zusammenfassend lässt sich sagen, dass diese Konstruktion eine hohe Effizienz und Benutzerfreundlichkeit beim Handling von gestapelten Lagergütern gewährleistet. Die automatische Rückkehr des Klinkenfingers und der gesamten Stapelklinke in ihre Ausgangsposition sorgt für einen optimierten Materialfluss, reduziert potenzielle Störungen beim Entladen und erleichtert die Handhabung erheblich. Dies macht das System besonders für Anwendungen geeignet, bei denen eine schnelle, einfache und störungsfreie Entnahme von Lagergütern erforderlich ist.

Der Klinkenfinger kann eine Fingerfeder aufweisen, die angeordnet ist, um den Klinkenfinger zu der Rückwand hinzuziehen. Dadurch wird neben dem Eigengewicht eine zusätzliche Möglichkeit geschaffen, dass der Klinkenfinger aus der Bereitschaftsstellung in die Ruhestellung zurückschwenkt. Dies kann durch die Fingerfeder kontrollierter und ggf. schneller erfolgen.

Dabei weisen die Flügel jeweils eine Gelenkbolzen-Bohrung auf, wobei der Gelenkbolzen in und zwischen den Flügeln schwenkbar gelagert ist. Die Gelenkbolzen-Bohrung ist dabei derart in die Flügel eingelassen, dass der Gestängebolzen zwischen dem Achsbolzen und dem Gelenkbolzen angeordnet, wobei der Achsbolzen der Stapelklinke in eingebauter Lage zu der Rückwand hin angerordnet ist und der Gelenkbolzen im Bereich der Flügel von der Rückwand weg weisend angeordnet ist, sodass sich der Gestängebolzen wie beschrieben zwischen dem Achsbolzen und dem Gelenkbolzen befindet.

Die Führungsaufnahme bildet weiterhin einen Unterstützungsstreifen unter den Klinkenfinger hin aus. Unter den Klinkenfinger beschreibt die Seite der Führungsaufnahme, zu welcher der Klinkenfinger bei ordnungsgemäßem Gebrauch nicht hin schwenkt, sondern wegschwenkt zur Ruhestellung. Folglich bildet die Führungsaufnahme den Unterstützungsstreifen in Arbeitslage weg von der Rückwand aus.

Entscheidend für die Funktion ist, dass die Innenkontur der Bogen-Langlöcher zwischen der Ruhestellung und der Arbeitsstellung der Stapelklinke eine Verlaufsunterbrechung für den Gestängebolzen aufweist. Eine mögliche Ausführung der Verlaufsunterbrechung kann eine Überwindungswulst sein, die als Erhebung von dem Achsbolzen wegsteht. Es kann sich aber auch um eine Stufe handeln, die den Verlauf der Innenkontur in zwei Abschnitte einteilt. Einen ersten Abschnitt weg von der Ruhestellung zu der Verlaufsunterbrechung und einen zweiten Abschnitt von der Verlaufsunterbrechung zur Arbeitslage. Dabei verläuft beispielsweise der erste Abschnitt näher an dem Achsbolzen und der zweite Abschnitt ansteigt und weiter weg von dem Achsbolzen verläuft. Zusätzlich kann es sich bei der Verlaufsunterbrechung auch um eine Ausnehmung oder Ausnehmungstasche handeln, in die der Gestängebolzen zu dem Achsbolzen hin einfährt und nach Überwindung der Verlaufsunterbrechung wieder herausfährt. Auch Mischformen hiervon sind möglich.

Es kann sich bei der Verlaufsunterbrechung auch um eine Überwindungswulst handeln, in definiertem Maße von dem Achsbolzen weiter weg steht als der restliche Verlauf der Innenkontur (bei einer Seitenansicht auf eine der Seitenwangen). Es ist aber auch definitonsgemäß auch eine Überwindungswulst gegeben, wenn zwischen der Ruhestellung und der Arbeitsstellung eine zu dem Achsbolzen hin gezogene Ausnehmungstasche vorhanden ist, in der der Gestängebolzen in der Bereitschaftsstellung einfährt, kurz verhofft und nach der ausreichenden Beladung der Stapelklinke in die Arbeitsstellung weiterfährt.

Diese Verlaufsunterbrechung unterbricht den bogenförmigen Verlauf der Innenkontur und ermöglicht eine mehrstufige Beladung der Stapelklinke. In Kombination mit der Radialfeder, die den Gestängebolzen stets an die Innenkontur drückt, fungiert die Verlaufsunterbrechung als zu überwindendes Hindernis. Die Überwindung dieses Hindernisses erfolgt, sobald eine definierte Last auf die Stapelklinke wirkt.

Der mehrstufige Beladungsprozess entsteht dadurch, dass das Hindernis der Verlaufsunterbrechung erst dann überschritten wird, wenn das zuvor festgelegte Gewicht der Lagergüter erreicht ist. Erst wenn die auf die Stapelklinke ausgeübte Kraft die definierte Kraft der Radialfeder übersteigt, gleitet der Gestängebolzen über die Verlaufsunterbrechung hinweg und wechselt von der Bereitschaftsstellung in die Arbeitsstellung. Gleichzeitig wird die nächste Stapelklinke aus der Ruhestellung in die Bereitschaftsstellung versetzt.

Die Verlaufsunterbrechung ist innerhalb der Innenkontur zwischen einer Ruhestellungs-Ausnehmung und einer Arbeitsstellungs-Ausnehmung angeordnet.

In einer alternativen Ausführungsform kann das zweite Federbein der Rückstellfeder zwischen den Gestängebolzen und die Stapelklinke hineinragen. Die Innenkontur des Bogen-Langlochs hat einen überwiegend bogenförmigen Abstand von 15 mm bis 85 mm zu den Bohrungen des Achsbolzens. Der bogenförmige Verlauf beginnt, ausgehend von der Bohrung in der Seitenwand, in die der Achsbolzen eingreift, kurz nach der 12-Uhr-Position und endet zwischen der 16:00- und 17:30-Position in Bezug auf diese Bohrung.

Dieser Verlauf entspricht dem typischen Muster des Bogen-Langlochs und damit auch der Innenkontur. Allerdings wird er beispielsweise durch die Überwindungswulst als Verlaufsunterbrechung unterbrochen, die einen größeren Radialabstand zur Bohrung des Achsbolzens aufweist. Abgesehen von der Überwindungswulst kann die Innenkontur einen Grund-Radialabstand von 15 mm bis 85 mm haben. Dies ermöglicht es der auslegenden Person, je nach Abstand festzulegen, wie viel Gewicht erforderlich ist, damit der Gestängebolzen über die Überwindungswulst hinweggeführt wird. Ein größerer Abstand erfordert eine größere Kraft und damit ein höheres Gewicht der Lagergüter.

Zusätzlich lässt sich die benötigte Kraft zur Überwindung der Verlaufsunterbrechung durch den Einsatz mehrerer Radialfedern anpassen. Es kann eine weitere Radialfeder vorhanden sein, die gemeinsam mit der ersten Radialfeder die Rückstellfeder an den Enden des Achsbolzens flankiert. Dadurch wird eine gleichmäßige Kraftverteilung sichergestellt und langfristige einseitige Belastungen des Achsbolzens oder des Gestängebolzens vermieden.

Darüber hinaus können an der Innenkontur zusätzlich zu der einen Verlaufsunterbrechung auch weitere Verlaufsunterbrechungen ausgebildet sein. Dies gibt der auslegenden Person die Möglichkeit, mehrstufige Beladungsprozesse gezielt zu berechnen und zu steuern.

Ein mögliches Ausführungsbeispiel einer erfindungsgemäßen Stapelklinke besteht aus einem Klinkenfinger und einer Führungsaufnahme. Die Führungsaufnahme setzt sich aus einem Bodenbereich und zwei rechtwinklig angeordneten Flügeln zusammen, die jeweils zwei Achsbolzen-Bohrungen und zwei Führungsbolzen-Langlöcher aufweisen. Zudem sind zwei Führungsbolzen-Langlöcher parallel zu einem Knick des Bodenbereichs ausgebildet, der zu den Flügeln überleitet. Der Klinkenfinger kann außerdem mit einer zusätzlichen Kunststoff-Beschichtung versehen sein.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: zeigt eine perspektivische Ansicht einer Stapelsäule von schräg oben;
- Figur 2: zeigt eine perspektivische Teilansicht der Stapelsäule aus Figur1 aus einer ersten Perspektive;
- Figur 3: zeigt die Teilansicht der Figur 1 aus einer zweiten Perspektive;
- Figur 4: zeigt eine Teilansicht auf eine der Seitenwangen;
- Figur 5: zeigt die Teilansicht der Seitenwange aus Figur 4 ohne weitere Bauteile;
- Figur 6: zeigt die Teil-Seitenansicht einer anderen Stapelsäule in einer ersten Beladungsstufe;
- Figur 7: zeigt die Teil-Seitansicht aus der Figur 6 in einer zweiten Beladungsstufe;
- Figur 8: zeigt die Teil-Seitansicht aus der Figur 6 in einer ersten Entladungsstufe;
- Figur 9: zeigt die Teil-Seitenansicht aus der Figur 6 in einer zweiten Entladungsstufe.
- Figur 10: zeigt die Teil-Seitenansicht einer anderen Stapelsäule in einer ersten Beladungsstufe;
- Figur 11: zeigt die Teil-Seitansicht aus der Figur 10 in einer zweiten Beladungsstufe;
- Figur 12: zeigt die Teil-Seitansicht aus der Figur 10 in einer ersten Entladungsstufe;
- Figur 13: zeigt die Teil-Seitenansicht aus der Figur 10 in einer zweiten Entladungsstufe.

### Ausführungsbeispiel

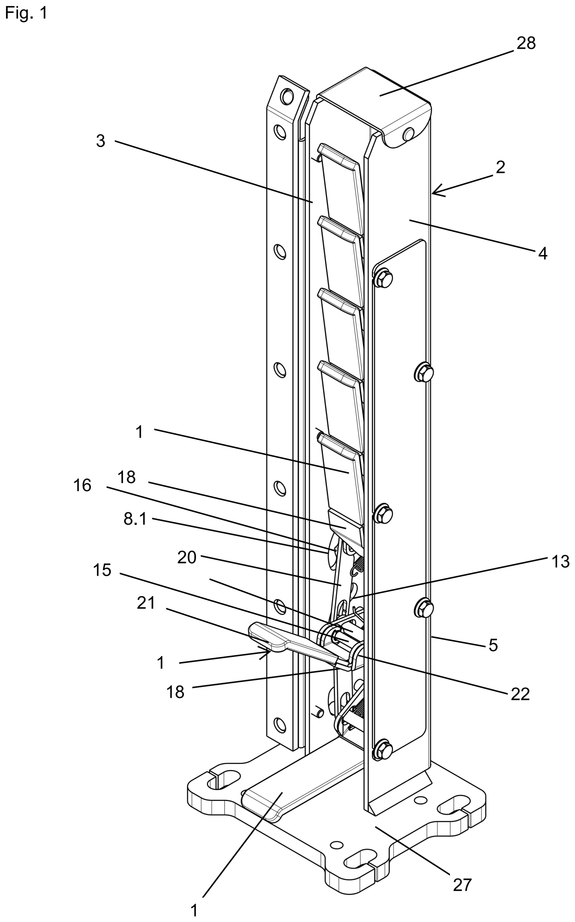

In Figur 1 ist eine perspektivische Ansicht einer Stapelsäule von schräg oben. Die Stapelsäule dient zur Aufnahme von Lagerteilen auf einer Stapelklinke 1, wobei ein Grundkörper 2 bestehend aus zwei Seitenwangen 3, 4, die über eine Rückwand 5 miteinander verbunden sind, wobei die beiden Seitenwangen 3, 4 mit der Rückwand 5 eine Rinnenform ausbilden. Dabei weist der Grundkörper 2 einends eine Bodenplatte 27 und andernends eine Abschlussplatte 28 auf.

Die Stapelklinken 1 können unterschiedliche Positionen einnehmen. Wenn die Stapelklinke 1 nicht beladen ist und auch nicht beladen werden soll, befindet sie sich in der Ruhestellung und ist dabei in den Grundkörper 2 aufgenommen.

Wenn die Stapelklinke 1 aus dem hier gezeigten Ausführungsbeispiel beladen werden soll, schwenkt sie aus dem Grundkörper 2 in einem Winkel weniger als 90 Grad heraus und kann dann die aufzunehmenden Lagergüter haltern, bis sie in die Arbeitslage rutscht, wodurch die Stapelklinke 1 in dem die Lagergüter aufnehmenden Bereich im Wesentlichen 90 Grad zu dem Grundkörper angeordnet ist.

Zwischen den beiden Seitenwangen 3, 4 sind in der Rinnenform die Stapelklinken 1 übereinander schwenkbar angeordnet. Die erste Stapelklinke 1, die sich am nächsten zur Bodenplatte 27 befindet weist regelmäßige die Besonderheit auf, dass sie sich in der Ausgangssituation nicht Ruhelage, sondern in Bereitschaftslage befindet.

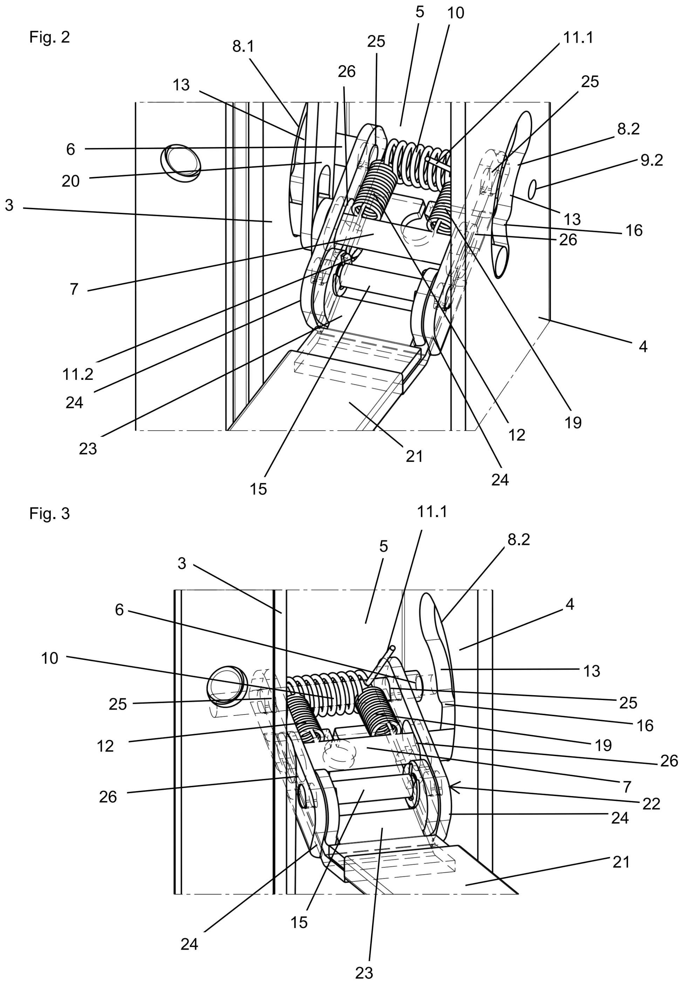

Jeder Stapelklinke 1 sind jeweils ein Achsbolzen 6 und einen Gestängebolzen 7 zugeordnet. Dies lässt sich besonders gut in den Figuren 2 bis 9 erkennen.

Dabei ist der Gestängebolzen 7 innerhalb zweier Bogen-Langlöcher 8.1, 8.2 beweglich geführt ist, wobei die Bogen-Langlöcher 8.1, 8.2 jeweils in eine der Seitenwangen 3, 4 eingelassen sind. In der Figur 1 ist zu erkennen, wie das Bogen-Langloch 8.1 und die Seitenwange 3 eingelassen ist. In den übrigen Figuren ist zusätzlich auch zu erkennen, dass die das Bogen-Langloch 8.2 in die Seitenwange 4 eingelassen ist. Dabei bilden die beiden Bogen-Langlöcher immer das jeweilige Spiegelbild des anderen Bogen-Langlochs 8.1, 8.2.

Weiter ist der Achsbolzen 6 zwischen den beiden Seitenwangen 3, 4 und in Bohrungen 9.1, 9.2 der Seitenwangen 3, 4 drehbar gelagert. Dabei ist die Bohrung 9.1 in die eine Seitenwange 3 und die Bohrung 9.2 in die andere Seitenwange 4 eingelassen. Die Einzelheiten lassen sich dabei aus den Figuren 2 bis 9 entnehmen.

Wie in den Figuren 2 und 3 gut zu erkennen ist, ist um den Achsbolzen 6 eine Rückstellfeder 10 angeordnet, deren erstes Federbein 11.1 gegen die Rückwand drückt 5 und deren zweites Federbein 11.2 den Gestängebolzen 7 zu einer Ruhestellung hindrückend angeordnet ist. Die Federbeine 11.1, 11.2 sind in den übrigen Figuren teilweise gestrichelt dargestellt, da die dazugehörige Seitenwange 3, 4 teilweise durchsichtig dargestellt wurde. Das zweite Federbein 11.2 ragt (sichtbar in verschiedenen Figuren) zwischen den Gestängebolzen 7 und die Stapelklinke 1 hinein.

In dem hier gezeigten Ausführungsbeispiel sind in den Figuren 2 und 3 außerdem jeweils zwei Radialfedern 12, 19 gezeigt, die den Gestängebolzen 7 und den Achsbolzen 6 verbinden. Die Radialfedern 12, 19 sind dabei derart angeordnet, dass sie den Gestängebolzen 7 zu dem Achsbolzen 6 ziehen. Dabei wiederum ziehen sie den Gestängebolzen 7 an eine zu dem Achsbolzen 6 weisende Innenkontur 13 der Bogen-Langlöcher 8.1, 8.2 heran. Dadurch erfolgt eine kontrollierte Bewegung des Gestängebolzens 7 entlang der Innenkontur 13 der Bogen-Langlöcher 8.1, 8.2. Die Radialfeder 12 und die weitere Radialfeder 19 sind so angeordnet, dass die Radialfeder 12 und die weitere Radialfeder 19 die Rückstellfeder 10 an dem Achsbolzen 6 jeweils endseitig flankieren. Die Einzelheiten hierzu lassen sich aus den Figuren 2 und 3 entnehmen.

Weiter ist in den Figuren 2 und 3 gezeigt, dass die Stapelklinke 1 aus einem Klinkenfinger 21 und einer Führungsaufnahme 22 besteht, wobei der Klinkenfinger 21 zu der Führungsaufnahme 22 über einen Gelenkbolzen 15 schwenkbar gelagert ist. Die Führungsaufnahme 22 bewerkstelligt, dass die Bewegungen der Stapelklinke 1 innerhalb des Grundkörpers 2 vollzogen werden können. Dazu hat die Führungsaufnahme 22 funktionale Verbindungselemente zu dem Achsbolzen 6, dem Gestängebolzen 7 und einem den Gestängebolzen 7 bewegenden Gestänge 20. Die Stapelklinken 1 sind dabei miteinander an dem Gestängebolzen 7 angreifend über das Gestänge 20 miteinander wirkverbunden. In den Figuren 1 und 2 ist das Gestänge 20 gezeigt.

Der Klinkenfinger 21 dient der Aufnahme der Lagergüter und Halterung der Lagergüter bis zu deren Entnahme.

Der Gelenkbolzen 15 wiederum hat die Aufgabe, dass der Klinkenfinger 21 zu der Führungsaufnahme 22 gelenkig angeordnet ist. Das bedeutet, dass der Klinkenfinger 21 aufgrund des Gelenkbolzen 15 zumindest eingeschränkt eine andere Richtung einnehmen kann, als dies der Führungsbolzen 22 bei einer starren Verbindung vorgeben würde.

Die Führungsaufnahme 22 wiederum besteht aus einem Bodenbereich 23 und zwei rechtwinklig angeordneten Flügeln 24 besteht, wobei die Flügel 24 zwei Achsbolzen-Bohrungen 25 und zwei Führungsbolzen-Langlöcher 26 aufweisen. Die zwei Führungsbolzen-Langlöcher 26 sind parallel zu einem Knick des Bodenbereichs 23 zu den Flügeln 24 ausgebildet. Die Flügel 24 bilden jeweils eine Gelenkbolzen-Bohrung aus, wobei der Gelenkbolzen 15 in und zwischen den Flügeln 24 dadurch schwenkbar gelagert ist.

Die Führungsaufnahme 22 bildet als Verlängerung des Bodens weg von der Rückwand 5 einen Unterstützungsstreifen 18 aus, der unter den Klinkenfinger 21 verläuft. Sollte der Klinkenfinger 21 aber in eine andere Richtung klappen, als dies die Führungsaufnahme 22 vorgibt, würde der Klinkenfinger 21 sich von dem Unterstützungsstreifen 18 wegheben.

Der Unterstützungsstreifen 18 dient in erster Linie eine Stabilisierung der gesamten Stapelklinke 1 bei einer Beladung und verhindert außerdem dass der Klinkenfinger 21 unkontrolliert nach unten weg klappt, wenn der Gelenkbolzen 15 beispielsweise als frei drehende Achse gestaltet ist. In einem nicht gezeigten Ausführungsbeispiel, kann der Gelenkbolzen 15 über eine Fingerfeder gehalten oder beeinflusst werden. In einem solchen Fall des Vorliegens einer Fingerfeder wäre es so, dass der Klinkenfinger 21 die Fingerfeder aufweist, die derart angeordnet ist, um den Klinkenfinger 21 beispielsweise zu der Rückwand 5 hin zu ziehen.

Die Ausführungsform aus den Figuren 1 bis 5 weist eine Besonderheit in der Ausformung der Innenkontur 13 auf. In der gezeigten Ausführungsform ist zwischen der Ruhestellung der Stapelklinke 1 und einer Arbeitsstellung der Stapelklinke 1 eine von dem Achsbolzen 6 wegragenden Verlaufsunterbrechung 16, der als eine Überwindungswulst ausgebildet. Die Verlaufsunterbrechung 16 stellt eine Hürde für den an der Innenkontur 13 entlanggleitenden Gestängebolzen 7 dar, wobei die Verlaufsunterbrechung 16 erst überglitten wird, wenn eine bestimmtes Gewicht auf die Stapelklinke 1 wirkt. Dies kann auch dadurch erreicht werden, dass nicht ein einzelnes Teil mit einem bestimmten Überwindungsgewicht auf die Stapelklinke 1 gelegt wird, sondern mehrere Teile, die erst in ihrer Gesamtheit das Überwindungsgewicht erreichen. Auf diese Weise ist es vorteilhaft möglich, dass die Stapelklinke mit mehreren Bauteilen und das ggf. auch nacheinander, also auch mit unterschiedlichen Bauteilen beladen wird.

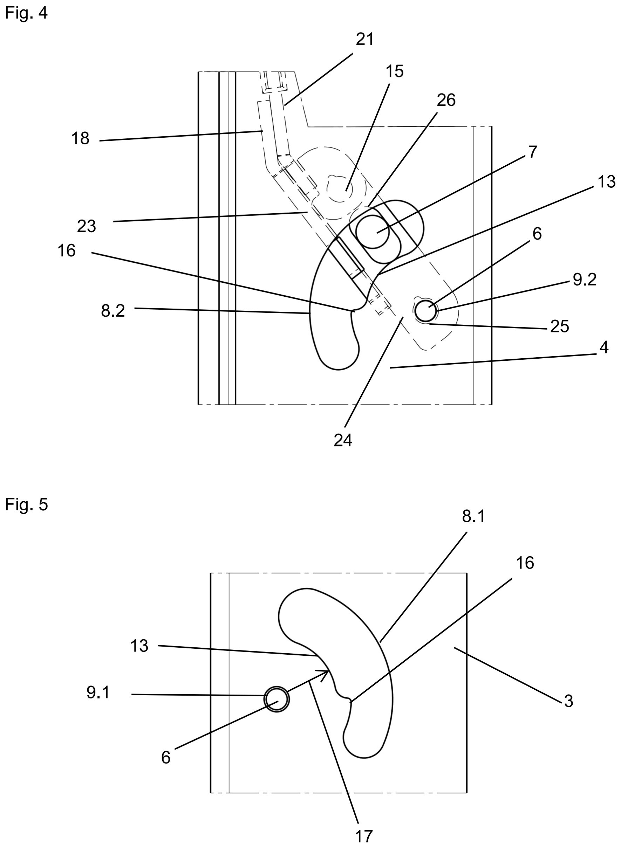

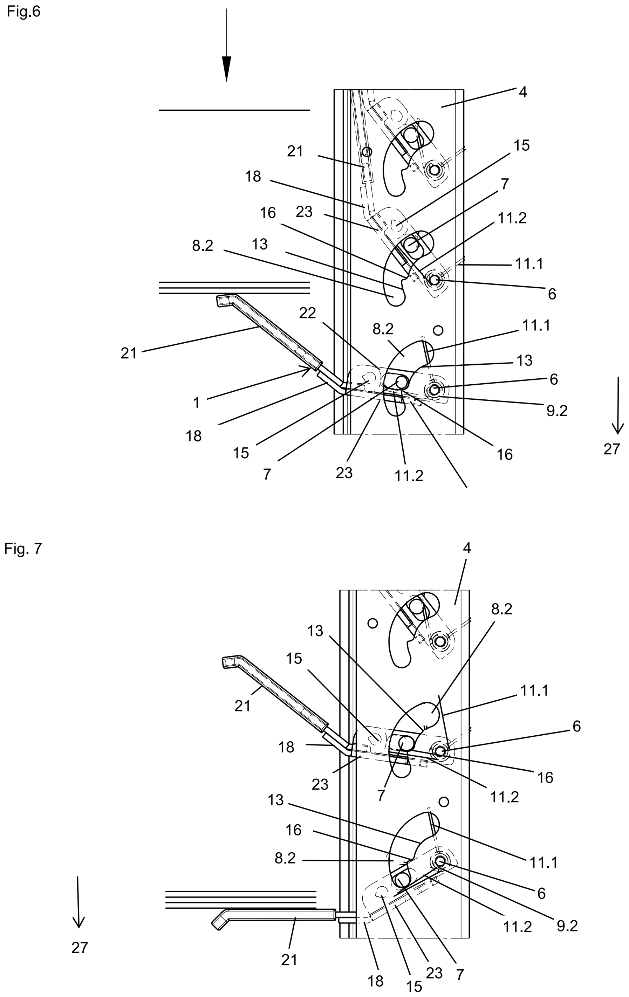

In der Figur 5 ist gezeigt, dass die Innenkontur 13 einen im Wesentlichen bogenförmigen Abstand 17 von 15 mm bis 85 mm zu der Bohrungen 9.1 des Achsbolzens 6 aufweist. Dies gilt auch für die Ausführungsform in den Figuren 6 bis 9.

In den Figuren 6 bis 9 ist die Ausführungsform aus den Figuren 1 bis 5 gezeigt, die die Verlaufsunterbrechung 16 in der Innenkontur 13 aufweist. Diese Ausführungsform hat beispielsweise den Vorteil, dass zwar mehrere Lagerteile auf einmal auf die Stapelklinke 1 geladen werden können, aber trotzdem einzeln entladen werden können.

In der Praxis kam es immer wieder zu Problemen, wenn beispielsweise zu viele ineinander und aufeinander liegende Lagerteile einzeln abgehoben werden mussten. Je größer die Anzahl der Lagerteile ist, desto häufiger wird beim Abheben ungewollt mehr als ein Lagerteil abgehoben. Das beruht darauf, dass es beispielsweise zu einem Saugnapf-Effekt oder einer Oberflächenhaftung kommen kann oder wenn Flüssigkeiten zwischen den einzelnen Lagerteilen vorhanden ist, so können die Kapillarkräfte durch beispielsweise Öl oder Wasser zwischen den Lagerteilen zu einem ungewollten Abheben nicht nur von einem Lagerteil, sondern gleich mehrerer Lagerteile führen.

Wenn aber nur eine bestimmte geringere Anzahl von Lagerteilen je Stapelklinke 1 gehaltert werden, so ist es einfacher möglich die Lagerteile einzeln abzuheben.

Figur 6 zeigt die Teil-Seitenansicht der Stapelsäule in einer ersten Beladungsstufe. Dort befindet sich die erste zu der Bodenplatte 27 weisende Stapelklinke 1 in der Bereitstellungslage. Die erste Stapelklinke 1 weist bereits drei Lagerteile auf, wobei eine viertes Lagerteil zugeführt wird.

In Figur 7 ist die Teil-Seitansicht aus der Figur 6 in einer zweiten Beladungsstufe gezeigt. Dort ist die erste Stapelklinke 1 nun in Arbeitsstellung und die darüber weg von der Bodenplatte 27 angeordnete zweite Stapelklinke 1 ist zur Beladung aus dem Grundköroper 2 herausgeschwenkt und befindet sich in der Bereitschaftsstellung. Beim Übergang von der ersten zur zweiten Beladungsstufe hat der Gestängebolzen 7 der ersten Stapelklinke 1 die Verlaufsunterbrechung 16 überschritten und ist in die Endlage in Richtung der Bodenplatte 17 gerutscht. Die zweite Stapelklinke 1 ist wiederum in die Bereitschaftsstellung gerutscht, sodass der Gestängebolzen 7 der zweiten Stapelklinke 1 nun an der Verlaufsunterbrechung 16 anliegt.

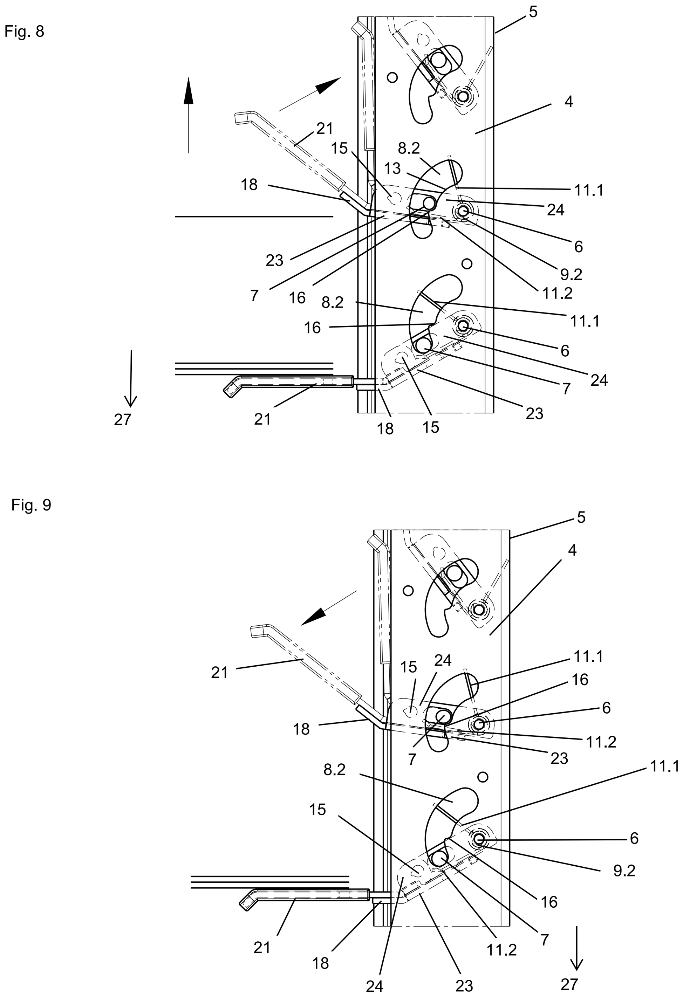

Figur 8 zeigt wiederum die Teil-Seitansicht aus der Figur 6 in einer ersten Entladungsstufe. In der ersten Entladungsstufe wird nun das zu oberst liegende Lagerteil von der ersten Stapelklinke 1 wieder weggehoben. Dabei würde die darüber angeordnete zweite Stapelklinke 1 eigentlich in der Bereitschaftsstellung verbleiben. Allerdings ist es nun aufgrund des Zusammenspiels des Gelenkbolzens 15 mit dem Gelenkfinger 21 möglich, dass der Gelenkfinger 21 weg von der Bodenplatte 27 schwenkt, ohne dass der Rest der zweiten Stapelklinke 1, also insbesondere die Führungsaufnahme 22 die Position der Bereitschaftsstellung verlassen muss. Trotzdem stört der Gelenkfinger 21 in der gezeigten Position weg von der Bodenplatte 27 nicht den Entladeprozess der darunter liegenden ersten Stapelklinke 1.

Figur 9 zeigt die Teil-Seitenansicht aus der Figur 6 in einer zweiten Entladungsstufe bei der der Gelenkfinger 21 der zweiten Stapelklinke 1 wieder in die Bereitschaftsstellung schwenkt und somit auch wieder auf dem Unterstützungsstreifen 18 aufliegt. Folglich befindet sich die zweite Stapelklinke 1 wieder insgesamt in der Bereitschaftsstellung.

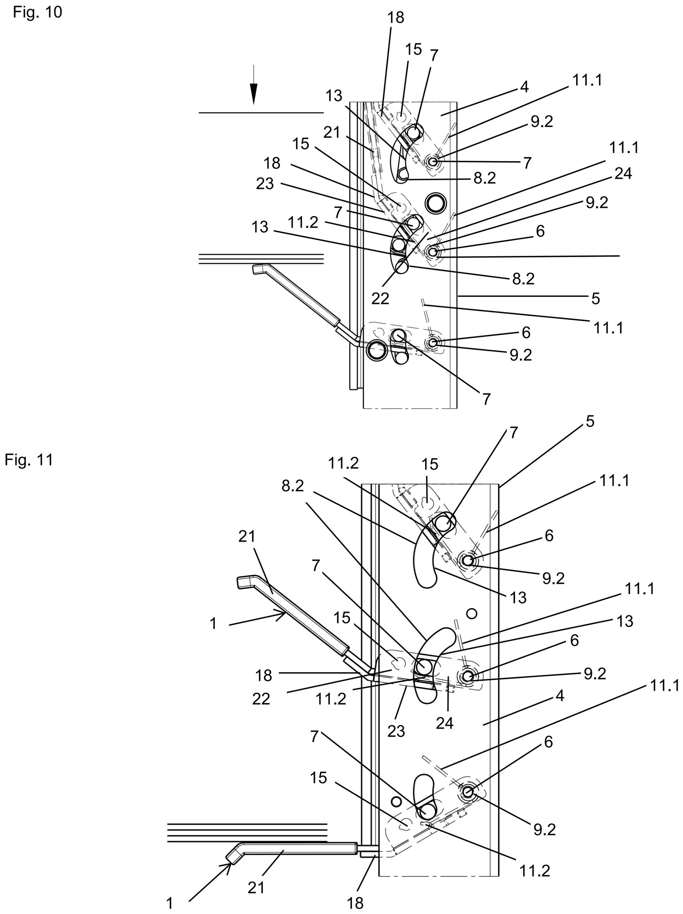

In den Figuren10 bis 13 wiederum ist eine Ausführungsform gezeigt, die keine Verlaufsunterbrechung 16 in der Innenkontur 13 aufweist. Diese Ausführungsform hat beispielsweise den Vorteil, dass zwar mehrere Lagerteile auf einmal auf die Stapelklinke 1 geladen werden können, aber trotzdem einzeln entladen werden können.

In der Praxis kam es immer wieder zu Problemen, wenn beispielsweise zu viele ineinander und aufeinander liegende Lagerteile einzeln abgehoben werden mussten. Je größer die Anzahl der Lagerteile ist, desto häufiger wird beim Abheben ungewollt mehr als ein Lagerteil abgehoben. Das beruht darauf, dass es beispielsweise zu einem Saugnapf-Effekt oder einer Oberflächenhaftung kommen kann oder wenn Flüssigkeiten zwischen den einzelnen Lagerteilen vorhanden ist, so können die Kapillarkräfte durch beispielsweise Öl oder Wasser zwischen den Lagerteilen zu einem ungewollten Abheben nicht nur von einem Lagerteil, sondern gleich mehrerer Lagerteile führen.

Wenn aber nur eine bestimmte geringere Anzahl von Lagerteilen je Stapelklinke gehaltert werden, so ist es einfacher möglich die Lagerteile einzeln abzuheben.

Figur 10 zeigt die Teil-Seitenansicht der Stapelsäule in einer ersten Beladungsstufe. Dort befindet sich die erste zu der Bodenplatte 27 weisende Stapelklinke 1 in der Bereitstellungslage. Die erste Stapelklinke 1 weist bereits drei Lagerteile auf, wobei eine viertes Lagerteil zugeführt wird.

In Figur 11 ist die Teil-Seitansicht aus der Figur 10 in einer zweiten Beladungsstufe gezeigt. Dort ist die erste Stapelklinke 1 nun in Arbeitsstellung und die darüber weg von der Bodenplatte 27 angeordnete zweite Stapelklinke 1 ist zur Beladung aus dem Grundköroper 2 herausgeschwenkt und befindet sich in der Bereitschaftsstellung.

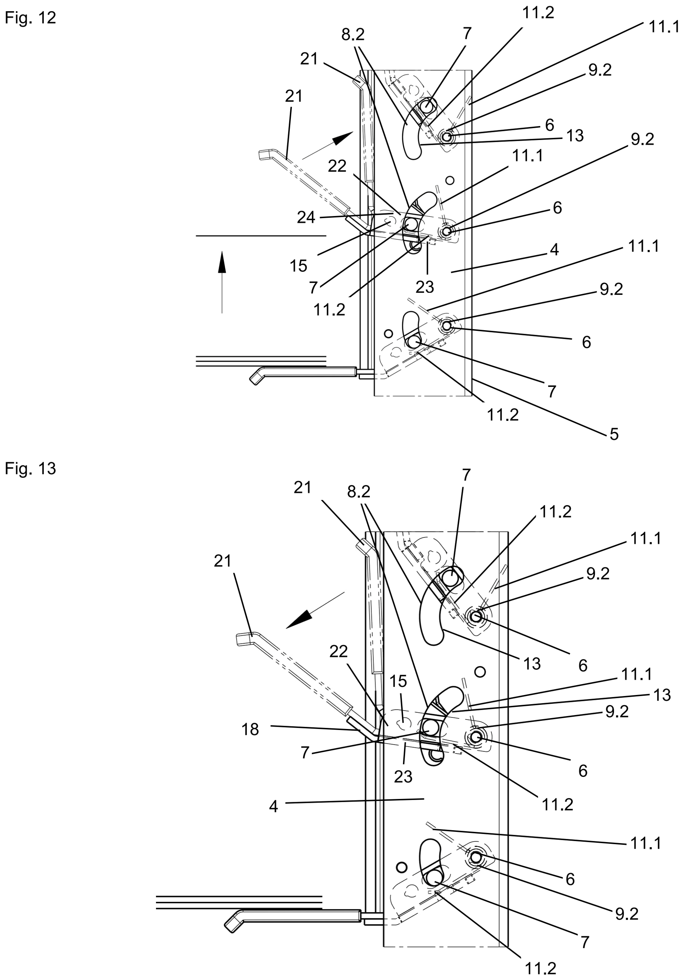

Figur 12 zeigt wiederum die Teil-Seitansicht aus der Figur 10 in einer ersten Entladungsstufe. In der ersten Entladungsstufe wird nun das zu oberst liegende Lagerteil von der ersten Stapelklinke 1 wieder weggehoben. Dabei würde die darüber angeordnete zweite Stapelklinke 1 eigentlich in der Bereitschaftsstellung verbleiben. Allerdings ist es nun aufgrund des Zusammenspiels des Gelenkbolzens 15 mit dem Gelenkfinger 21 möglich, dass der Gelenkfinger 21 weg von der Bodenplatte 27 schwenkt, ohne dass der Rest der zweiten Stapelklinke 1, also insbesondere die Führungsaufnahme 22 die Position der Bereitschaftsstellung verlassen muss. Trotzdem stört der Gelenkfinger 21 in der gezeigten Position weg von der Bodenplatte 27 nicht den Entladeprozess der darunter liegenden ersten Stapelklinke 1.

Figur 13 zeigt die Teil-Seitenansicht aus der Figur 10 in einer zweiten Entladungsstufe bei der der Gelenkfinger 21 der zweiten Stapelklinke 1 wieder in die Bereitschaftsstellung schwenkt und somit auch wieder auf dem Unterstützungsstreifen 18 aufliegt. Folglich befindet sich die zweite Stapelklinke 1 wieder insgesamt in der Bereitschaftsstellung.

### Bezugszeichenliste

| | |
|---|---|
| 1 | Stapelklinke |
| 2 | Grundkörper |
| 3 | Erste Seitenwange |
| 4 | Zweite Seitenwange |
| 5 | Rückwand |
| 6 | Achsbolzen |
| 7 | Gestängebolzen |
| 8 | Bogen-Langloch |
| 9 | Bohrung |
| 10 | Rückstellfeder |
| 11.1, 11.2 | Federbein |
| 12 | Radialfeder |
| 13.1, 13.2 | Innenkontur |
| 14 | Radialabstand |
| 15 | Gelenkbolzen |
| 16 | Verlaufsunterbrechung |
| 17 | Abstand |
| 18 | Unterstützungsstreifen |
| 19 | weitere Radialfeder |
| 20 | Gestänge |
| 21 | Klinkenfinger |
| 22 | Führungsaufnahme |
| 23 | Bodenbereich |
| 24 | Flügel |
| 25 | Achsbolzen-Bohrung |
| 26 | Führungsbolzen-Langloch |
| 27 | Bodenplatte |
| 28 | Abschlussplatte |
| 29 | |
| 30 | |
| 31 | |
| 32 | |
| 33 | |

## Patentansprüche

1. Stapelsäule zur Aufnahme von Lagerteilen auf einer Stapelklinke (1),
- wobei ein Grundkörper (2) aus zwei Seitenwangen (3, 4) besteht, die über eine Rückwand (5) miteinander verbunden sind,
- wobei die beiden Seitenwangen (3, 4) mit der Rückwand (5) eine Rinnenform ausbilden,
- wobei zwischen den beiden Seitenwangen (3, 4) in der Rinnenform die Stapelklinken (1) übereinander schwenkbar angeordnet sind,
- wobei den Stapelklinken (1) jeweils einen Achsbolzen (6) und einen Gestängebolzen (7) zugeordnet ist,
- wobei der Gestängebolzen (7) innerhalb zweier Bogen-Langlöcher (8.1, 8.2) beweglich geführt ist,
- wobei die Bogen-Langlöcher (8.1, 8.2) jeweils in eine der Seitenwangen (3, 4) eingelassen sind,
- und der Achsbolzen (6) zwischen den beiden Seitenwangen (3, 4) und in Bohrungen (9.1, 9.2) der Seitenwange (3, 4) drehbar gelagert ist,
- wobei um den Achsbolzen (6) eine Rückstellfeder (10) angeordnet ist, deren erstes Federbein (11.1) gegen die Rückwand drückt (5) und deren zweites Federbein (11.2) den Gestängebolzen (7) zu einer Ruhestellung hindrückend angeordnet ist,
**dadurch gekennzeichnet, dass**
- eine Radialfeder (12) den Gestängebolzen (7) und den Achsbolzen (6) verbindet und
- den Gestängebolzen (7) zu dem Achsbolzen (6) ziehend angeordnet ist und dabei den Gestängebolzen (7) an eine zu dem Achsbolzen (6) weisende Innenkontur (13) der Bogen-Langlöcher (8.1, 8.2) zieht,
- wobei die Stapelklinke (1) aus einem Klinkenfinger (21) und einer Führungsaufnahme (22) besteht, wobei der Klinkenfinger (21) zu der Führungsaufnahme (22) über einen Gelenkbolzen (15) schwenkbar gelagert ist.

2. Stapelsäule nach Anspruch 1, **dadurch gekennzeichnet, dass** die Innenkontur (13) zwischen der Ruhestellung der Stapelklinke (1) und einer Arbeitsstellung der Stapelklinke (1) eine Verlaufsunterbrechung (16) ausbildet.

3. Stapelsäule nach Anspruch 1 oder 2, **dadurch gekennzeichnet, dass** die Innenkontur (13) zwischen der Ruhestellung der Stapelklinke (1) und einer Arbeitsstellung der Stapelklinke (1) die Verlaufsunterbrechung (16) ausbildet.

4. Stapelsäule nach Anspruch 2 oder 3, **dadurch gekennzeichnet, dass** die Verlaufsunterbrechung (16) einen von dem Achsbolzen (6) wegragenden Überwindungswulst ausbildet.

5. Stapelsäule nach Anspruch 1, **dadurch gekennzeichnet, dass** der Gelenkbolzen (15) eine Schenkelfeder aufweist, die angeordnet ist, um den Klinkenfinger (21) zu dem Unterstützungsstreifen (18) hin zu drücken.

6. Stapelsäule nach Anspruch 1, **dadurch gekennzeichnet, dass** die Führungsaufnahme (22) aus einem Bodenbereich (23) und zwei rechtwinklig angeordneten Flügeln (24) besteht, wobei die Flügel (24) zwei Achsbolzen-Bohrungen (25) und zwei Führungsbolzen-Langlöcher (26) aufweisen.

7. Stapelsäule nach Anspruch 1, **dadurch gekennzeichnet, dass** die Führungsaufnahme (22) einen Unterstützungsstreifen (18) unter den Klinkenfinger (21) hin ausbildet.

8. Stapelsäule nach Anspruch 6, **dadurch gekennzeichnet, dass** die zwei Führungsbolzen-Langlöcher (26) parallel zu einem Knick des Bodenbereichs (23) zu den Flügeln (24) ausgebildet sind.

9. Stapelsäule nach einem der vorigen Ansprüche, **dadurch gekennzeichnet, dass** die Flügel (24) jeweils eine Gelenkbolzen-Bohrung ausbilden, wobei der Gelenkbolzen (15) in und zwischen den Flügeln (24) schwenkbar gelagert ist.

10. Stapelsäule nach einem der vorigen Ansprüche, **dadurch gekennzeichnet, dass** das zweite Federbein (11.2) zwischen den Gestängebolzen (7) und die Stapelklinke (1) hineinragt.

11. Stapelsäule nach einem der vorigen Ansprüche, **dadurch gekennzeichnet, dass** die Innenkontur (13) einen im Wesentlichen bogenförmigen Abstand von 15 mm bis 85 mm zu den Bohrungen (9.1, 9.2) des Achsbolzens (6) aufweist.

12. Stapelsäule nach einem der vorigen Ansprüche, **dadurch gekennzeichnet, dass** eine weitere Radialfeder (19) vorhanden ist, wobei die Radialfeder (12) und die weitere Radialfeder (19) die Rückstellfeder (10) an dem Achsbolzen (6) jeweils endseitig flankieren.

13. Stapelsäule nach einem der vorigen Ansprüche, **dadurch gekennzeichnet, dass** die Innenkontur (13) weitere Überwindungswulste ausbildet.

14. Stapelsäule nach einem der vorigen Ansprüche, dass die Stapelklinken (1) miteinander an dem Gestängebolzen (7) angreifend über ein Gestänge (20) miteinander wirkverbunden sind.
